# EUROPEAN PATENT APPLICATION

(11) **EP 3 651 092 A1**
(43) Date of publication of application: **13.05.2020**
(21) Application number: 18382790.6
(22) Date of filing: 06.11.2018
(51) Int. Cl.: G06Q 10/08, G06Q 50/28

(54) **TRACKING DEVICES USING BLOCKCHAIN OR OTHER DISTRIBUTED LEDGER TECHNOLOGY**

(71) Applicant: Universidade da Coruña, 15071 A Coruña (ES)
(72) Inventor: Fernández Caramés, Tiago Manuel, 15071 A CORUÑA (ES); Fraga Lamas, Paula, 15071 A CORUÑA (ES)
(74) Representative: ZBM Patents - Zea, Barlocci & Markvardsen

(57) **Abstract**

The description relates a method of controlling, by a control module, a device for tracking a product, the device comprising an identification module to provide identification data of the device; a sensor module to provide data about at least one parameter that impact the device; a positioning module to provide positioning data of the device; a communications module to establish communications with at least a Blockchain; a Blockchain management module to exchange data to a Blockchain; the control module. The method comprises the control module identifying the device based on identification data; determining the state of the product based on data provided by the sensor module and on the identified device associated to it; determining the location of the device based on positioning data; by the Blockchain management module and the communications module, exchanging to a Blockchain at least one the following: identification data; data received from the sensor module; the state of the product; positioning data.

## Description

The present disclosure relates to methods and devices for tracking products, sub-products, items or physical elements, for example, in smart factories.

### BACKGROUND

The concept of product, sub-product, item or physical element is essential in Industry and it can refer to any object that can be moved through the manufacturing and/or supply chain or that is involved in the manufacturing or supplying processes. Examples of such objects are pipes, pallets, containers, vehicles, accessories, components, raw materials, robots or even human operators. Therefore, in a wide sense, the term can be applied to anything that can be moved or can interact with the processes related to an industry.

A common limitation for traditional factories is the lack of a whole traceability of many products, sub-products, items or physical elements. In many cases operators do not know exactly in which manufacturing stage a product is or where it is physically located. This lack of traceability derives into inefficiencies and the absence of knowledge on which tasks are actually being performed or have been performed on the factory at specific time instants. In fact, it is also common not to know in real time which products are ready to ship or where they are. Moreover, the environmental factors that influence the state of a product (e.g., temperature, relative humidity, accelerations) are usually not known for its whole life-cycle. Furthermore, operators often rely on external physical interfaces to read the information on the product or the processes it is subjected to.

In addition, products, sub-products, items or physical elements can be moved from multiple providers, through different manufacturing chains and by a number of transport means. Such processes are often defined and monitored by ISO standards, which involve common practices and certain procedures to preserve efficiency and quality. Thus, products, sub-products, items or physical elements are moved through diverse environments and exposed to external factors that may impact their state. For instance, a container of fresh fruit may be moved from a farm to a processing factory or distributor. The container can be exposed to temperature oscillations or certain gases that can make the fruit rot, hence destroying the container's content. Similar examples can be described regarding other temperature-sensitive industrial materials, like chemicals, medical supplies or other objects, whose properties may change due to being exposed to a certain ambient or to external agents.

Many industries also benefit from knowing the exact or approximate location of a product, sub-product, item or physical element, since it allows them to obtain really valuable information on the state of a factory, like the existence of bottlenecks in the production chain or the stock available at certain areas. In addition, such an information, when collected during the whole life of product in conjunction with the critical parameters that impact the quality of the product, sub-product, item or physical element, can increase remarkably the efficiency and productivity of an industrial company.

In order to carry out traceability procedures, products, sub-products, items or physical elements have to be identified. Nowadays, such an identification is usually performed by using systems like 1D barcodes (traditional barcodes), 2D barcodes (QR codes) or RFID (Radio Frequency IDentification) tags. Commercial products are commonly identified by assigning them a product code that is known as GTIN (Global Trade Item Number), although some retailers prefer to use EAN (European Article Number) or UPC (Universal Product Code) barcode symbology. GTIN and EAN/UPC codes are still widely used, but traditional paper and plastic labels have first evolved from simple barcodes to RFID tags, and then to sophisticated smart labels that embed modules that provide wireless communications, energy efficient displays, sensors and actuators.

When labels and tags are attached to products, sub-products, items or physical elements, they are identified by readers that are deployed through the monitored area, may it be a factory, a warehouse or a transport vehicle. The cost of the reader and the labels differs significantly depending on the used technology. Paper labels are usually very cheap, but they require line-of-sight to be read. Passive RFID tags are usually inexpensive and do not use batteries, but their reading range is often short, so they have to be placed near specific reading points, thus usually requiring deploying a dense reader infrastructure.

The information on the traceability of products, sub-products, items or physical elements can be collected and stored in different ways. Local storage (e.g., hard disks, SD cards) can be inexpensive, but it can be exposed to technical problems (e.g., disk failures) and external factors (e.g., falls), which may harm and loss the stored data. Remote storage systems (e.g., cloud systems, NAS (Network-Attached Storage)) provide remote access and often redundancy to the stored data, but its management usually depend on external untrusted companies and they may be exposed to DoS (Denial of Service) attacks that affect the availability of the stored data.

On the other hand, in the last years, Blockchain has arisen as a new way of stored data (or proof of such data) so that it can be transferred in a secure way and among entities that do not trust each other. Blockchain can be considered to be still under development in many aspects, but some of its applications for fields where trust is a necessity (e.g., finance) have been already deployed.

Consequently, there is a need for a device that at least partially solves the aforementioned problems.

### SUMMARY

In a first aspect, a method of controlling, by means of a control module, a device for tracking a product, sub-product, item or physical element is provided. The device may comprise an identification module configured to provide identification data of the device associated to the product, sub-product, item or physical element to be tracked; a sensor module configured to provide data about at least one parameter that impact the device; a positioning module configured to provide positioning data of the device; a first communications module configured to establish communications with at least a Blockchain or other DLT (Distributed Ledger Technology); a Blockchain management module configured to exchange data with a Blockchain; the control module. The method may comprise:
- the control module automatically identifying the device based on data provided by the identification module;
- the control module automatically determining the state of the product, sub-product, item or physical element, based on data provided by the sensor module and on the identified device associated to the product, sub-product, item or physical element;
- the control module automatically determining the location of the device based on positioning data provided by the positioning module;
- the control module, by means of the Blockchain management module and the first communications module, automatically uploading to a Blockchain at least one of the following:
   ∘ identification data received from the identification module;
   ∘ data received from the sensor module;
   ∘ the state of the product, sub-product, item or physical element, determined by the control module;
   ∘ positioning data received from the positioning module.

Consequently, a whole traceability of many products, sub-products, items or physical elements is possible. Operators may know exactly in which manufacturing stage a product is or where it is physically located. Thus, this traceability derives into the knowledge on which tasks are actually being performed or have been performed on the factory at specific time instants. Moreover, the environmental factors that influence the state of a product (e.g., temperature, relative humidity, accelerations) are usually known for its whole life-cycle. Furthermore, operators should no longer rely on external physical interfaces to read the information on the product or the processes it is subjected to.

In addition, products, sub-products, items or physical elements can be moved from multiple providers, through different manufacturing chains and by a number of transport means. Thus, products, sub-products, items or physical elements are moved through diverse environments and exposed to external factors that may impact their state.

In order to carry out traceability procedures, products, sub-products, items or physical elements have to be identified correctly. This way, the provision of the identification module allows providing identification data without requiring, for example, readers deployed through the monitoring area requiring line-of-sight to read the labels or tags or readers with a reading range often short so that a dense reader infrastructure must be deployed. In the invention, the identification data may be provided by the identification data and said data may be sent by means of the communications module to be stored in the Blockchain or other DLT, to be shown by means of a management system or to be locally shown to an operator by means of a display module if the device comprises it.

On the other hand, the provision of the sensor module allows determining the state of the product, sub-product, item or physical element. The sensor module may comprise at least one sensor element. Sensor elements may be in charge of capturing environmental information, for example, temperature, humidity or noise, or other parameters such as movement, pressure or light. Sensor elements may be also considered as human-interfaces like buttons or joysticks that provides feedback from operators. Taking into account the information obtained by the sensor elements it is possible to know, for example, if a container of fresh fruit has been exposed to excessive temperature or humidity and the container's content has been destroyed. Similar examples may be disclosed regarding other temperature-sensitive industrial materials, like chemicals, medical supplies or other objects, whose properties may change due to being exposed to a certain ambient or to external agents.

Furthermore, many industries also benefit from knowing the exact or approximate location of a product, sub-product, item or physical element, since it allows them to obtain really valuable information on the state of a factory, like the existence of bottlenecks in the production chain or the stock available at certain areas. In addition, such an information, when collected during the whole life of product in conjunction with the critical parameters that impact the quality of the product, sub-product, item or physical element, can increase remarkably the efficiency and productivity of an industrial company. In any case, the provision of the positioning module allows dynamically knowing the location of the product, sub-product, item or physical element to which the device is associated, for example, if the product, sub-product, item or physical element is indoors or outdoors. This way, the device may use both an indoor and an outdoor positioning submodules that rely in different technologies. In any case, the control module may select the appropriate communications interface comprised in the communications module and/or the appropriate identification interface comprised in the identification module according to the location of the device and, consequently, of the product, sub-product, item or physical element.

With respect to the provision of the Blockchain management module, it allows exchanging securely the collected data with a Blockchain or other DLT, which is distributed among peers. In summary, the Blockchain management module may handle the information or data exchange with the Blockchain (and the Smart Contracts if it is required).

In some examples, the identification module may comprise at least one identification interface. In other examples the identification module may comprise at least two identification interfaces and the method may comprise:
- the control module automatically selecting the appropriate identification interface to be used based at least on the environment in which the device is located.

As described above, for example, the appropriate identification interface may depend on whether the device is indoors or outdoors.

According to some examples, the sensor module may comprise at least one sensor element. The method may comprise:
- the control module automatically configuring at least one sensor comprised in the sensor module.

In some examples, the device may comprise an actuation module comprising at least one actuator element. The method may comprise:
- the control module, according to the determined state of the product, sub-product, item or physical element, automatically acting upon an actuator element.

The actuation module may comprise at least one of the following actuator elements:
- at least one actuator element configured to generate an audible signal (e.g. a speaker, a buzzer, etc.);
- at least one actuator element configured to generate a visual signal (e.g. a display screen (for example, LCD), a plurality of LEDs (Light Emitting Diode), etc.);
- at least one actuator element configured to generate a haptic signal (e.g. a vibrator motor).

This way, the device is able to provide information on the state of the products, sub-products, items or physical elements it is attached or associated to by using the information collected from sensor elements, actuator elements or from surrounding objects/systems. Furthermore, the device is also able to provide communications interfaces to an operator. For example, a simple button (either hardware or software, inside a touch-sensitive display) is enough for indicating that the product, sub-product, item or physical element has been processed at a specific stage and/or that the quality control supervision can be performed.

In some examples, the device may comprise a second communications module configured to establish communication with at least one external system. The communications module may comprise at least one communications interface. The method may comprise:
- the control module automatically establishing communications with the external system by means of the communications interface.

Regarding the second communications module, it allows establishing communications between the device and, for example, a wireless router through an appropriate communications interface. The wireless router may provide access to the external system. The external system may be, for example:
- a mobile device;
- at least one wireless router;
- a data network;
- a management system;
- a blockchain or other DLT system;
- a smart contract system.

In some examples, the first and second communications modules may be the same module.

In some examples, the first and/or second communications module may comprise at least two communications interfaces. The method may comprise:
- the control module automatically selecting the appropriate communications interface to be used based at least on the environment in which the device is located.

Such a location of the device may be provided by the positioning module.

In some examples, the device may comprise a display module. The method may comprise:
- the control module automatically shows data received from any module comprised in the device and/or data determined by the control module, by means of the display module.

The display module may show, for example, to a plant operator, the information or data received by the device. The display module may be managed directly by the control module.

According to some examples, the display module may be configured to display a user interface and to provide data to the control module when a user acts upon a data/control element comprised in the user interface. The method may comprise:
- the control module automatically receiving data from the display module.

According to some examples, the device may comprise a storage module configured to store data received from any module comprised in the device and/or data determined by the control module. The method may comprise:
- the control module automatically storing in the storage module data received from any module comprised in the device and/or data determined by the control module.

This way, the storage module may store statically all the relevant data and events collected from other modules.

According to a second aspect, a non-transitory computer program product is provided. The computer program product may comprise program instructions for causing a control module to perform a method as described above of controlling a device for tracking a product, sub-product, item or physical element. The computer program may be embodied on a storage medium (for example, a CD-ROM, a DVD, a USB drive, on a computer memory or on a read-only memory) or carried on a carrier signal (for example, on an electrical or optical carrier signal).

In another aspect, a control module for controlling a device for tracking a product, sub-product, item or physical element is provided. The control module may comprise a memory and a processor, embodying instructions stored in the memory and executable by the processor, the instructions comprising functionality to execute a method of controlling a device for tracking a product, sub-product, item or physical element, as described above.

According to yet another aspect, a control module for controlling a device for tracking a product, sub-product, item or physical element is provided. The device may comprise an identification module configured to provide identification data of the device associated to the product, sub-product, item or physical element to be tracked; a sensor module configured to provide data about at least one parameter that impact the device; a positioning module configured to provide positioning data of the device; a first communications module configured to establish communications with at least a Blockchain or other DLT; a Blockchain management module configured to exchange data with a Blockchain (or other DLT); the control module; the control module comprising:
- means for automatically identifying the device based on data provided by the identification module;
- means for automatically determining the state of the product, sub-product, item or physical element, based on data provided by the sensor module and on the identified device associated to the product, sub-product, item or physical element;
- means for automatically determining the location of the device based on positioning data provided by the positioning module;
- means for automatically uploading to a Blockchain at least one of the following data (e.g. data collected by the control module), by means of the Blockchain management module and the first communications module:
   ∘ identification data received from the identification module;
   ∘ data received from the sensor module;
   ∘ the state of the product, sub-product, item or physical element, determined by the control module;
   ∘ positioning data received from the positioning module.

In another aspect, a control module for controlling a device for tracking a product, sub-product, item or physical element is provided. The device may comprise an identification module configured to provide identification data of the device associated to the product, sub-product, item or physical element to be tracked; a sensor module configured to provide data about at least one parameter that impact the device; a positioning module configured to provide positioning data of the device; a first communications module configured to establish communications with at least a Blockchain or other DLT; a Blockchain management module configured to exchange data with a Blockchain or other DLT; the control module; the control module being configured to:
- automatically identify the device based on data provided by the identification module;
- automatically determine the state of the product, sub-product, item or physical element, based on data provided by the sensor module and on the identified device associated to the product, sub-product, item or physical element;
- automatically determine the location of the device based on positioning data provided by the positioning module;
- automatically upload to a Blockchain at least one of the following data, by means of the Blockchain management module and the first communications module:
   ∘ identification data received from the identification module;
   ∘ data received from the sensor module;
   ∘ the state of the product, sub-product, item or physical element, determined by the control module;
   ∘ positioning data received from the positioning module.

In another aspect, a device for tracking a product, sub-product, item or physical element is provided. The device may comprise an identification module configured to provide identification data of the device associated to the product, sub-product, item or physical element to be tracked, a sensor module configured to provide data about at least one parameter that impact the device, a positioning module configured to provide positioning data of the device, a first communications module configured to establish communications with at least a Blockchain or other DLT, a Blockchain management module configured to exchange data with a Blockchain or other DLT, a control module as disclosed above.

In some examples, the identification module may comprise at least two identification interfaces.

According to some examples, a device may comprise an actuation module comprising at least one actuator element, for example, at least one actuator element configured to generate an audible signal; at least one actuator element configured to generate a visual signal; at least one actuator element configured to generate a haptic signal.

The device may further comprise a second communications module configured to establish communications with at least one external system. The second communications module may comprise at least one communications interface. If the first and/or second communications module comprises at least two communications interfaces, the control module may select the appropriate communications interface according to at least the location of the device (e.g. indoors or outdoors).

Furthermore, the device may comprise a smart contract management module and an external system may be a smart contract system. This way, the control module, by means of the smart contract management module, may handle the information exchanges with the smart contracts.

In some examples, the device may comprise a display module as disclosed above. The display module may be configured to display at least one of the following data collected or provided by the control module:
- data received by the control module from any module comprised in the device;
- data determined by the control module;
- data on the state of the product, sub-product, item or physical element;
- data indicating tasks to be performed on a product, sub-product, item or physical element.

According to some examples, a device may comprise a storage module configured to store data received from any module comprised in the device and/or data determined by the control module.

On the other hand, a device may comprise a power module configured to power any of the modules comprised in the device. Consequently, the power module may provide energy to different modules of the device and may be essentially composed by one or more batteries, one or more voltage/current regulators and/or one or more energy harvesting submodule (e.g. photovoltaic panels).

In some examples, a device may be attachable to or wearable by a product, sub-product, item or physical element to be tracked.

In another aspect, a system for tracking at least one product, sub-product, item or physical element is provided. The system may comprise:
- at least one device as previously disclosed;
- a management system configured to control at least one device.

As described above, the device may comprise a communications module configured to establish communications, for example, with the management system. Consequently, the management system may comprise a communications module with an interface that is compatible with at least one interface of the communications module of the device.

### BRIEF DESCRIPTION OF THE DRAWINGS

Non-limiting examples of the present disclosure will be described in the following, with reference to the appended drawings, in which:
Figure 1 is an illustration of a block diagram describing an example of a device for tracking a product, sub-product, item or physical element;
Figure 2 is an illustration of a block diagram describing an example of a system for tracking a product, sub-product, item or physical element, said system comprising a device for tracking a product, sub-product, item or physical element, for example, the device shown in Figure1.

### DETAILED DESCRIPTION OF EXAMPLES

Industry 4.0 represents the next step on the evolution of traditional factories towards actual smart factories, which are designed to be more efficient in terms of resource management and to be highly flexible to adapt to ever-changing production requirements. One of the foundations of Industry 4.0 consists in gathering as much data as possible from the diverse parts of the value chain. Such a data gathering should be performed in fast and efficient ways in order to be useful for a factory. Data collection can be carried out through systems that should allow for acquiring, storing, processing and exchanging information with devices deployed in factories or suppliers, or owned by clients.

With the objective of providing such a level of connectivity, the Industry 4.0 paradigm proposes the use of relevant disruptive technologies that enable autonomous communications among multiple industrial devices distributed throughout a factory and on the Internet. Examples of such enabling technologies are 3D printing, Augmented Reality, Cyber-Physical Systems, IIoT (Industrial Internet of Things) or edge computing. In order to optimize the industrial processes carried out in an Industry 4.0 smart factory and to harness some of the previously mentioned technologies, it is necessary to make use of advanced labeling systems to make products, sub-products, items or physical elements "smarter".

This intelligent interaction can be performed in two different ways. The first one consists in interacting directly with the products, sub-products, items or physical elements if they embed the required hardware/software. However, the whole hardware/software is usually not operative until the latest assembly stages, so it is necessary to take a second approach: to add temporary external hardware/software through an intelligent device. Such a second approach transforms mere items into smart ones, it is more appropriate during the manufacturing of the product and, in some cases, it can be even used after the product, sub-product, item or physical element has been sold.

According to the invention, a device may be able to display and keep track of sensor data, location and manufacturing information of a product, sub-product, item or physical element in smart factories with the help of Blockchain technology. Such a device can be attached to or carried by a product, sub-product, item or physical element to be tracked.

Consequently, the device of the invention is an advanced alternative that acts like a smart label for providing such an intelligent device. The device is able to operate autonomously and may require no human intervention in many scenarios. This autonomy is essential in the Industry 4.0 smart factory, where traditional labelling solutions are not appropriate due to the expected automated recollection of data and the required coordination with other systems. The device not only shows dynamic information but may include a module that displays changing data after receiving them through wireless transceivers from remote management system. In addition, the invention may embed sensors and actuators, which allows for collecting really useful data on processes and that provides a way for the operators to interact with the device without needing external equipment (e.g., tablets, smartphones, PDAs).

Moreover, when the principles of IIoT are applied on an object attached or associated to a device of the invention (the object may carry the device), it can be identified remotely and discovered by other systems, what enables them to react to its presence, triggering specific events or performing a number of actions on them. The amount of possible interactions is endless and provides unprecedented industrial scenarios where objects can talk to other objects, machines, remote computers or workers.

A smart factory manager can send information to the device through wireless communication channels from a remote location and receive data from it. These operations are carried out from a management system, which is able to manage tens of thousands of deployed devices simultaneously. This implies that, because human beings do not need to check, print or replace paper or plastic labels, operational costs can be reduced, and many human errors can be avoided.

The device may be ruggedized or encapsulated through a protective water-proof case, which also helps to attach it easily to any product, sub-product, item or physical element, exchanging data wirelessly. Such a case may follow the following factors, which are common in industrial environments:
- Small size. The device may be as small as possible in order to avoid operational problems during the processing of products, sub-products, items or physical elements at any of the manufacturing stages;
- Presence of metals. Ideally, device, especially communications module and identification module, should operate properly when attached to or surrounded by metal objects;
- High relative humidity levels. Device should be able to operate in warehouses and factories where relative humidity may be high;
- Presence of acids and corrosive substances. The case should withstand the exposition to acids, salinity or other corrosive substances;
- Interference. The device should be able to transmit in the presence of the typical electromagnetic interference sources that can be found in industrial environments;
- Tolerance to high temperatures. The case should withstand the same range of temperatures that may impact the products, sub-products, items or physicals elements it is attached to;
- High pressure. The case should withstand the same pressure range that the products, sub-products, items or physical elements it is attached to.

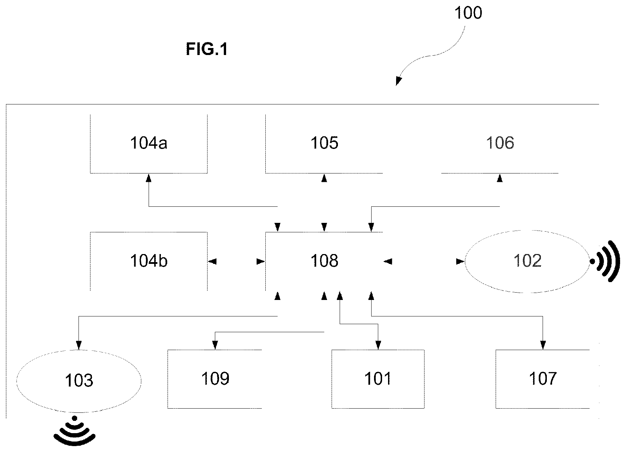

As can be seen in Figure 1, a device 100 for tracking a product, sub-product, item or physical element may comprise the following modules:
- an identification module 103 configured to provide identification data of the device 100 to guarantee that the device (and, hence the product, sub-product, item or physical element) is identified correctly;
- a sensor module 104a configured to provide data about at least one parameter that impact the device 100;
- a positioning module 101 configured to provide positioning data of the device 100;
- a communications module 102 configured to establish communications between the device 100 and an external system such as a wireless router;
- a Blockchain management module 106 configured to exchange data with a Blockchain or other DLT;
- a control module 108 configured to control the different modules of the device 100.

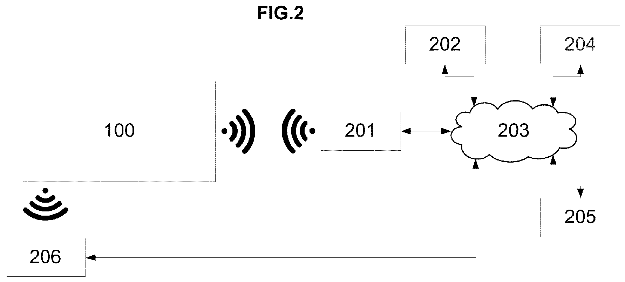

The identification module 103 is responsible for identifying the product, sub-product, item or physical element through the identification system 206 (see Figure 2). The identification module 103 can be composed by one or more identification interfaces, which are selected depending on the environment by control module 108. The identification system 206 consists at least of one identification reader. The identification module 103 and the identification system 206 use the same identification technology, which can be, for example, passive or active RFID, NFC, UWB, ultrasounds or infrared.

Regarding the communications module 102, it allows for establishing communications between the device 100 and, for example, a wireless router 201 (see Figure 2) through the appropriate communications interface, for exchanging information. Such wireless communications performed by the communications module 102 can be performed through different transceivers (e.g., IEEE 802.11 b/g/n/ac, IEEE 802.15.4, Bluetooth, LoRA, SigFox, UWB) depending on the energy consumption constraints and the desired communications range.

More specifically, the communications module 102 may comprise at least one communications interface. Said communications interface may be a wireless interface. Said wireless interface may be a wireless short-range communications interface based on, for example, Bluetooth (e.g. Bluetooth 5.0), NFC, Zigbee or Wi-Fi technologies, or a long-range communications interface based on, for example, GSM, GPRS, 3G, 4G, 5G or satellite technology or optical fiber, ADSL, etc.

In some examples, the communications module 102 may comprise at least two communications interfaces. In this case, the appropriate communications interface may be selected by the control module 108 according to, for example, the location of the device 100 (e.g. if the device is located indoors or outdoors).

This way, regarding the identification module 103 and the communications module 102, they can make use of independent or common technologies since many communications technologies can also identify a product. However, there are technologies designed exclusively for identification purposes. For instance, one of the most popular is RFID, which makes uses use of radio frequency transponders that transmit unique identifiers (mainly in different ISM bands) and, in some cases, certain stored data. RFID systems consist of a reader and tags that exchange information by using different wave propagation techniques, which require no line-of-sight to communicate and that, at short distances, usually do not need to use batteries for the tags. An evolution of RFID is NFC, which is mostly dedicated to short distance communications (usually less than 30 centimeters). What is special about NFC devices is that they can change their roles, acting in some time instants as readers and later as tags, what adds flexibility to the communications.

RFID use on industrial environments has grown remarkably in the last years, but there are other technologies that are competing to provide more complex interactions with the products, sub-products, items or physical elements. Such technologies are mainly communication technologies that have been re-purposed to provide, at the same time, identification and a communications channel. For example, Bluetooth Low Energy (BLE) is a generic WPAN technology for short distance communications at the 2.4 GHz ISM band. Most BLE devices have a range of up 10 meters, but industrial devices may reach 100 meters. BLE makes use of different profiles depending on the type of communications, existing specific devices called "beacons", which are lightweight devices that emit periodically a signal that allows them to be located and identified by other BLE devices, being especially useful for indoor location. Thus, a BLE beacon module can be used like an RFID tag for notifying the presence of a smart label.

WiFi (i.e., the IEEE 802.11 family of standards) can also be used both for identification and communications. WiFi devices work either in the 2.4 GHz or 5 GHz ISM bands that may easily provide a range of up to 100 meters in unobstructed industrial warehouses. The MAC address can be used to identify devices like the one proposed when it carries a WiFi transceiver.

Other technologies that can be used to implement the identification module 103 are:
- Ultrasounds. They are usually applied in positioning systems, but they can also be used for identification. Such a kind of technologies emit sound waves at a frequency that is over the human hearing range. Identification is possible by sending unique codes.
- Infrared. Such a kind of transceivers transmits pulses in a part of the light spectrum that cannot be viewed by humans. They are very popular in appliances like TVs, but they require line-of-sight between the transmitter and the receiver. Like ultrasounds, identification is performed by sending unique codes.
- ZigBee. It is a set of communications protocols based on IEEE 802.15.4 PHY and MAC layers that is aimed at creating low-energy consumption Wireless Sensor Networks (WSNs). They are able to create mesh networks that extend the communication range. They operate mainly in ISM UHF bands and at 2.4 GHz. The identification can be carried out easily through the unique MAC address assigned to every node.
- Long-Rage Wide Area Network (LoRA). It is a low-energy consumption wireless technology designed for creating wide area and secure loT networks. It operates just under 1 GHz and is ideal for WSN applications. LoRA devices can be identified by their device address.
- Dash7. It is a sort of active RFID technology that provides low-energy consumption long-range communications in sub-1 GHz bands. Dash7 devices may be identified at the Link Layer by the TADDR (Target Address), which can be a 2-byte Virtual ID or an 8-byte UID (Unique ID).
- Ultra-Wide Band (UWB) is a technology able to carry out low-energy wide-bandwidth communications. It is usually aimed at short-range indoor applications. UWB systems can use internal IDs or addresses to identify the communicating devices.
- Other technologies include WirelessHART, RuBee (IEEE 1902.1), Z-Wave, Insteon, SigFox, ANT+, EnOcean, Weightless-P, Wi-SUN or IEEE 802.11 ah, among others.

The device 100 can make use of more than one identification module 103 and communications module 102, so it is able to select the most appropriate depending on the environment in which the device is located. For instance, if the device 100 detects (by means of its sensors, identification module, communications module or positioning module) that it is inside a specific warehouse, it is able to make use of the most convenient identification module or communications module according to the existing infrastructure or, for example, depending on the most energy-efficient solution. Thus, the device is able to self-configure and decide on the used hardware depending on the environment.

With respect to the positioning module 101, it can use both an indoor and an outdoor positioning submodules that rely on different technologies. Examples of outdoor positioning technologies are the ones based on GNSS (Global Navigation Satellite System) technologies like GPS, Galileo or GLONASS, which offer enough accuracy for most applications. However, indoors, positioning becomes tricky and, in general, it is less accurate. Nonetheless, indoor positioning techniques have been studied thoroughly in the last years and they can be applied to most of the identification/communication technologies mentioned previously. For instance, four kinds of techniques can be used to track WiFi and Bluetooth devices indoors:
- Based on Received Signal Strength Indicator (RSSI). This type of techniques processes the RSSI received from the tracked wireless device. They can obtain good accuracy for area positioning level and they are usually cheap, but their stability oscillates due to the impact of the environment and depends on the hardware used.
- Fingerprinting. It consists in storing the RSSI or Received Signal Strength (RSS) in a database that associates the received signal strength of different access points or beacons with a specific location, assuming that, due to indoor propagation, such an association is unique (like a fingerprint) for every location. However, changes in the environment influence the collected fingerprints, so in dynamic environments the database has to be updated periodically or use some kind of dynamic calibration.
- Angle of Arrival (AoA). It is based on the capability of the system to determine the direction of arrival of the received signal.
- Time of Arrival (ToA) and Time Difference of Arrival (TDoA). They estimate distance by calculating the time required by the signal to arrive at certain point or the successive time differences when arriving at the receiver. These techniques depend on using accurate internal clocks, although TDoA removes the ToA requirement of having to synchronize the transmitter and receiver clocks.

Other technologies like ultrasounds make use of sonar/radar-like measurements by evaluating the echo produced when sound waves impact an object or the ToA between a transmitter and a receiver. Infrared systems work in a similar way, but by measuring the time required by a line-of-sight non-visible light transmission.

Thanks to the joint work of the positioning module 101 and the identification module 103 and communications module 102, the device 100 is able to obtain the location of a product, sub-product, item or physical element associated to it with an accuracy in the range of meters. Such an accuracy allows for optimizing the traceability, identification, monitoring and location of the industrial products, sub-products, items or physical elements that take part in industrial processes.

Consequently, the positioning module 101 can make use, for instance, of a GNSS and/or and RTK (Real-Time Kinematic) system such as GPS, GLONASS, GALILEO, WASS, EGNOSS, QZSS, SBAS or BEIDU.

The sensing module 104a and an actuator module 104b (a device may also comprise an actuator module) are responsible for collecting the data from sensors and acting upon actuators. These sensors and/or actuators may be useful for monitoring the state of products, sub-products, items or physical elements. This way, the sensing module 104a may be comprised of one or more sensors and the actuation module 104b may be comprised of one or more actuators. The sensors and/or actuators may be useful for monitoring the state of products, sub-products, items or physical elements. The device 100 can make use of different sensors like temperature sensors, relative humidity sensors, barometers, accelerometers, impact sensors, tilt sensors, noise sensors, light sensors, pressure sensors or gyroscopes. Sensors may be also considered certain human-interfaces like buttons or joysticks, which provide feedback from operators. Examples of actuators are leds, buzzers (e.g. piezo-electric buzzers) or servo-motors. In general, the actuator module 104b may comprise at least one of the following actuator elements: at least one actuator element configured to generate an audible signal; at least one actuator element configured to generate a visual signal; at least one actuator element configured to generate a haptic signal. The sampling frequency of the sensors and reaction of the actuators varies depending on the used hardware and on other modules (e.g., positioning, identification, communications or power module), which are able to change the sensing/actuation instants according to the surrounding environment and to extend battery life. This way, the invention is able to provide information on the state of the products it is attached to by using the information collected from sensors, actuators or from surrounding objects/systems.

Consequently, the invention is also able to provide communications interfaces to the operator (i.e., actuators). For instance, a simple button (either hardware or software, inside a touch-sensitive display) is enough for indicating that the product, sub-product, item or physical element has been processed at a specific stage and that the quality control supervision can be performed. In the same way, incidents during manufacturing can be transmitted directly to designers in order to correct engineering errors fast.

The Blockchain management module 106 may be software or hardware and it is responsible for handling the information exchanges with a remote Blockchain 202 (see Figure 2) or other DLT in a secure way. Such exchanges may occur, for example, through the Internet or an internal Local Area Network (LAN) 203 and are essentially the exchanging of information with the Blockchain 202 or for consulting certain data stored on it. In the invention, the data collected by the device 100 may be sent, verified and stored securely. Basically, a Blockchain is a distributed data structure shared among multiple computing nodes that stores securely information (or its hash).

Blockchain, which originated from the cryptocurrency Bitcoin, allows for creating decentralized applications able to track and store transactions performed by a large amount of simultaneous users and devices. Blockchain or other DLT technologies (e.g. Directed-Acyclic Graphs (DAG)) can add value to many industrial applications by tackling some of the most relevant challenges that they currently face:
- Decentralization. It is desirable in many Industry 4.0 applications, since they rely on expensive centralized servers that are also costly to deploy and maintain. In addition, many industrial companies outsource their server infrastructure to third-parties (mainly because they do not consider such infrastructure as their core business), so they pay to middlemen for the cost of an outsourced centralized solution.
- It is really common to update Industry 4.0 systems (like Industrial Internet of Things (IIoT) devices) due to security issues or to upload new software/firmware. In certain scenarios the updating process requires to perform manual tasks in multiple devices spread throughout a large factory. Therefore, it is necessary to find a way to ease such tedious and inefficient tasks and distribute software updates simultaneously to as many smart devices as possible.
- In most industries it is necessary to ensure the authenticity of the transactions performed with certain partners, service providers, manufacturers, suppliers and even governments. Due to these reasons, it is required a technology that provides mechanisms to verify accountability and to add trust.
- The data exchanged with third companies is key for some businesses, so they should be protected and anonymized. The same occurs with the data collected by IloT devices, which should be secured and remain private to non-authorized parties.
- Many industrial companies also depend on closed-source code, which also increases the lack of trust, since it is actually not transparent how the code works. Therefore, to provide trust and security, it is essential to foster open-source approaches. Nonetheless, it should be emphasized that open-source code can also suffer from bugs and exploits but, since it is verified by many developers, it is less susceptible to malicious modifications.

In addition, the Blockchain may be setup to determine who can access the information: everyone with access to the Blockchain or only a subset of authorized entities. Thus, a device 100 of the invention may make use of different types of Blockchains. The Blockchain 202 can be basically public, private or a consortium, existing at least one miner or Blockchain controller 204:
- Public Blockchains: they do not require the approval of an entity to join the blockchain. Anyone can publish and validate transactions. Public blockchains can be useful in certain industrial scenarios where a high level of transparency is necessary or where massive consumer device interaction is required.
- Private Blockchains: the participation in the Blockchain is regulated by the owner. Therefore, such an owner decides on issues like the mining rewards or who can access the network.
- Consortium or federated Blockchains: a group of owners operate the Blockchain. They restrict user access to the network and the actions performed by the participants. In fact, the consensus algorithm is usually run by a pre-selected group of nodes, what increases transaction privacy and accelerates transaction validation. This can be the case of groups of industrial companies that work on the same field and that have to exchange and validate transactions: each entity may have its own validation node and when a minimum amount of nodes approves a transaction, it is added to the blockchain.

Besides interacting with a Blockchain 202, the invention can also take part in smart contracts. A smart contract can be defined as a self-sufficient decentralized code that is executed autonomously when certain conditions of a business process are met. The code may translate into legal terms the control over physical or digital objects through an executable program. For example, a smart contract may be used as a sort of communication mechanism with a provider when certain materials run low and it is expected more incoming work that would require them.

Smart contract conditions are based on data that depends on external services that take data from the real world and store them into the Blockchain (or vice versa). Such services are referred to as oracles. For example, an oracle could inspect records to identify whether an asset has arrived, and it could write the arrival information on the Blockchain. Then, the smart contract might trigger a conditional statement based on the read value and execute a block of code.

In addition, the invention has been devised to follow the principles of the Internet of Things (IoT) paradigm, so its modular architecture can integrate in the same network multiple remote devices that perform specific tasks, thus acting as mere sensors, actuators, information providers or just simple identifiers. This makes the devices really flexible, being able to only use certain modules when the application needs them.

With respect to the control module 108, it may comprise or may be implemented by electronic means, computing means or a combination of them, that is, said electronic or computing means may be used interchangeably so that a part of the described means may be electronic means and the other part may be computing means, or all described means may be electronic means or all described means may be computing means.

Examples of a control module 108 comprising only electronic means (that is, a purely electronic configuration) may be a programmable electronic device such as a CPLD (Complex Programmable Logic Device), an FPGA (Field Programmable Gate Array) or an ASIC (Application-Specific Integrated Circuit).

Examples of a control module 108 comprising only computing means may be a computer system, which may comprise a memory and a processor, the memory being adapted to store a set of computer program instructions, and the processor being adapted to execute these instructions stored in the memory in order to generate the various events and actions for which the control module has been programmed.

The memory may be comprised in the processor (e.g. an EEPROM) or may be external. In the case of an external memory, it can be, for example, data storage means such as magnetic disks (e.g., hard disks), optical disks (e.g., DVD or CD), memory cards, flash memory (e.g., pendrives) or solid-state drives (SSD based on RAM, based on flash, etc.). On the other hand, these storage means can be part of the device 100 itself and / or can be arranged remotely thereto, wired or wirelessly connected. In the case of being remotely arranged, the communication established between the device 100 and the storage means can be ensured by, for example, username / password, cryptographic keys and / or by an SSL tunnel established in the communication between the device 100 and the storage means.

Therefore, the set of computer program instructions executable by the processor (such as a computer program) may be stored in a physical storage means, such as those mentioned, but may also be carried by a carrier wave (the carrier medium). it can be any entity or device capable of carrying the program), such as electrical or optical, which can be transmitted via electrical or optical cable or by radio or other means. In this way, when the computer program is contained in a signal that can be transmitted directly by means of a cable or other device or means, the carrier means can be constituted by said cable or another device or means.

The computer program may be in the form of source code, object code, a code intermediate source and object code such as in partially compiled form, or in any other form suitable for use in the implementation of the method. The carrier may be any entity or device capable of carrying the computer program.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

Consequently, the control module 108 may be based on a low-power hardware device like a microcontroller, a SoC, a PSoC (Programmable SoC) or an ASIC, although, in some scenarios, it may be possible to use other hardware like an FPGA, a CPLD (Complex Programmable Logic Device) or a DSP (Digital Signal Processor). Control module 108 can also contain different types of embedded memories to store data and program instructions. In addition, control module 108 may include other electronic components like oscillators or programming interfaces (e.g., JTAG, ICSP). This way, the control module 108 may also be implemented by using different types of electronic devices. Examples of such devices are Central Processing Units (CPUs), microcontrollers, Field-Programmable Gate Arrays (FPGAs), Application-Specific Integrated Circuits (ASIC) or System-On-Chips (SOCs). CPUs are powerful but consume too much energy for small battery-powered devices. Microcontrollers are usually used for low-power systems because they consume less energy, they can be reprogrammed easily, and they are powerful enough for carrying out the tasks to be performed. FPGAs can be really powerful for performing certain deterministic demanding tasks, but development is not as easy as with microcontrollers and they consume more power than other devices due to the need for powering the used logic continuously. ASICs are designed explicitly for specific applications and thus they are extremely powerful (since they have been optimized for these applications, their power consumption can be minimized). However, the cost of developing an ASIC is really high (millions of U.S. dollars) and it only compensates when a really high amount of devices is going to be produced. Regarding SoCs, they integrate in a single integrated circuit a powerful microcontroller and several peripherals (e.g., wireless transceivers), what makes them consume more power than traditional microcontrollers.

In addition, the control module 108 may also have a hybrid configuration between computing and electronic means. In this case, the system may comprise a memory and a processor to implement computationally part of its functionalities and certain electronic circuits to implement the remaining functionalities.

On the other hand, the control module 108 may comprise one or more sub-modules, each of which may perform a part of the events and actions for which the control module as a whole has been programmed. If the sub-modules are close enough, they may be wired (for example, through Ethernet technology) or may be connected through short-range communication technologies, for example, Bluetooth (e.g. BLE - Bluetooth Low Energy), NFC, Zigbee or WiFi technology. If the sub-modules are far away, they may be connected through long-range wireless communication technologies such as GSM, GPRS, 3G, 4G, 5G or satellite technology or wired technologies (for example, through optical fiber, ADSL, etc.).

According to some examples, a device 100 may also comprise a storage module 107. Said module allows for storing locally, for example, relevant data and events collected from other modules. It may use of permanent storage hardware (e.g. a micro-SD card or an EEPROM) or dynamic memory (e.g. RAM). In any case, said storage module 107 may be the same memory described for storing the computer program or may be another memory.

Furthermore, a device 100 may comprise a power module 109 configured to provide energy to different modules of the device 100 (i.e. it is responsible for powering the device) and may be essentially composed by one or more batteries, one or more voltage/current regulators and one or more energy harvesting submodules (e.g., photovoltaic panels).

In fact, in order to minimize power consumption (it may be essential for implementing the energy efficiency policy), the device 100 is able to remain asleep most of the time until an event happens. For example, such an event may be triggered because the product, sub-product, item or physical element the device is attached or carried to starts to move. Another similar events may be triggered due to the interaction of an operator with the device (e.g., an operator pushes a button) or when the internal clock of the device determines that is time to wake up (i.e., there is a specific wake-up time schedule).

In some examples, a device 100 may further comprising a display module 105 that may show to an operator, for example, the information received by the device. Regarding the display module 105, it has been traditionally not included in labelling systems due to its energy consumption and cost, but at the expense of only showing static information and having to use additional external reading devices that are usually expensive (due to the ruggedness required in industrial environments), may not be practical in some scenarios (e.g., when operators need to use both hands continuously) and sometimes they are only carried to perform a specific action (e.g., it might be fairly easier to just push a button in a smart label to indicate the event). Therefore, the external display is important for visualization and interaction. Display cost is still high for certain types of displays while they are not massively produced, but energy efficiency is probably the main challenge.

Among the different display technologies, traditional Liquid-Crystal Displays (LCDs) have become cheaper and offer different variants with diverse characteristics (e.g., Twisted Nematic (TN) and Super-Twisted Nematic (STN) types are cheap, but offer a poor viewing angle, and while Vertical Alignment (VA) and In-Plane Switching (IPS) LCDs are more expensive, they improve viewing angles). However, almost all LCD variants need to be refreshed roughly 30 times per second (in spite of not showing new information), being only the backlight responsible for up to 40% of the power consumed. These facts imply that, in general, LCD technology is not the best fit for devices whose battery life is important.

In contrast, electronic-ink (e-ink) displays only use power during the process of updating the shown information. Such a power depends on the display size. No power is consumed when the information is displayed and there is no backlight, so battery life is increased remarkably.

Organic Light-Emitting Display (OLED) technology is also becoming increasingly popular in electronic devices thanks to its color definition, fast response time, wide viewing angles and high brightness/contrast. There are multiple OLED variants, which are classified in Active Matrix OLED (AMOLED) and Passive Matrix OLED (PMOLED). The main advantage of OLED is its low power consumption: a backlight is not required and only the pixels that are switched on are actually powered, what means that they consume 20-80 % of an LCD of the same size. Nonetheless, OLED displays are currently expensive.

There are other potential technologies that can be used for the display module 105, like Electroluminescent Displays (ELDs), but the most popular and available commercially are the three previously mentioned (LCD, e-ink, OLED). Among them, e-ink is clearly the one with less power consumption, although it must be noted that such displays are usually monochrome, and they required ambient light, which may not be available in certain industrial scenarios.

This way, display module 105 may be made of a hardware display that shows relevant information about a product, sub-product, item or physical element associated to the device 100 to operators. The display module 105 may be touch-sensitive and can make use of different display technologies, like LCD, LED, OLED, AMOLED or e-ink, depending on the battery-life restrictions.

The invention replaces the need for printed instructions. Therefore, it is able to indicate the tasks to be performed on a product, sub-product, item or physical element at a certain stage on the production chain. The information on the tasks can be updated periodically, as the product, sub-product, item or physical element travels through the manufacturing chain or depending on the tools and machines available at certain time instants. In addition, the label may show operators the features that the product, sub-product, item or physical element should have after being processed.

After a product, sub-product, item or physical element leaves one processing stage, the invention is able to detect such an event, which can be reflected on the traceability log.

As can be seen in Figure 2, a system (e.g. an industrial system) for tracking a product, sub-product, item or physical element may comprise:
- At least one device 100 as described above;
- A management system 205.

Multiple instances of device 100 may coexist within the same industrial system, being controlled by the management system 205, which may be remotely located. The management system 205 may be responsible for the remote configuration and management of the deployed devices 100. The information collected by the devices deployed on a smart factory may be processed in real time, showing in a Cyber-Physical System (CPS) or a digital twin the state of the monitored objects, warnings, events and all the relevant information for the factory operation to get a clear picture of what is happening in every specific area of the smart factory.

Such a system may consist in a back-end, a front-end and a local database. The back-end may be responsible for collecting the data received from the multiple instances of device 100 from at least one wireless router 201 and through the Internet or internal LAN 203. The collected data may be stored in the local database. Authorized remote users may access the management system 205 through the front-end, which provides an interface for configuring and sending information to a specific remote device 100. Such information may include, for instance, the values of parameters like the sensor sampling frequency or textual information to be displayed through display module 105. The front-end also allows for visualizing the information stored on the local database of the management system 205 through a user-friendly interface. The back-end may include a REST API (Application Programming Interface) in order to provide access for developers to the management system 205 functionality.

Due to its complexity, it is worth describing a storage submodule (not shown) of the management module 205. Although the storage submodule usually first stores the data locally (e.g., in hard disks or SD cards), such data may be uploaded to a Blockchain 202 in order to store it securely.

Depending on the selected identification and communications modules, the invention may need a different support infrastructure, but, in any case, the overall system would consist in:
- At least a device 100 according to the given previous description.
- At least an external system.

The external system may consist in:
- At least one wireless router 201 that exchanges data with at least one device 100;
- A data network 203 (e.g., the Internet or an Internal LAN (Local Area Network));
- A management system 205;
- A blockchain 202 or other DLT.

In any case, the control module 108 may be configured to execute a method of controlling a device 100 for tracking a product, sub-product, item or physical element. The method may comprise:
- the control module 108 automatically identifying the device 100 based on data provided by the identification module 103;
- the control module 108 automatically determining the state of the product, sub-product, item or physical element, based on data provided by the sensor module 104a and on the identified device associated to the product, sub-product, item or physical element;
- the control module automatically determining the location of the device based on positioning data provided by the positioning module 101;
- the control module, by means of the Blockchain management module 106 and the first communications module 102, automatically uploading to a Blockchain 202 at least one of the following:
   ∘ identification data received from the identification module;
   ∘ data received from the sensor module;
   ∘ the state of the product, sub-product, item or physical element,
   determined by the control module;
   ∘ positioning data received from the positioning module;
   that is, data to be uploaded may be data collected or generated by the control module 108.

Furthermore, data collected or generated by the control module 108 may be sent to a management system 205 as previously disclosed by means of the second communications module 102.

When the identification module 103 comprises at least two identification interfaces, the method may further comprise:
- the control module 108 automatically selecting the appropriate identification interface to be used based on the environment in which the device is located, for example, if the device is indoors or outdoors.

In the same way, when the first and/or second communications module 102 comprises at least two communications interfaces, the method may further comprise:
- the control module automatically selecting the appropriate communications interface to be used based on the environment in which the device is located.

On the other hand, when the display module 105 is configured to display a user interface and to provide data to the control module 108 when a user acts upon a data/control element comprised in the user interface, may further comprise:
- the control module 108 automatically receiving data from the display module, said data being related with the data/control element.

For reasons of completeness, various aspects of the present disclosure are set out in the following numbered clauses:
Clause 1. A method of controlling, by means of a control module, a device for tracking a product, sub-product, item or physical element, the device comprising:
   - an identification module configured to provide identification data of the device associated to the product, sub-product, item or physical element to be tracked;
   - a sensor module configured to provide data about at least one parameter that impact the device;
   - a positioning module configured to provide positioning data of the device;
   - a first communications module configured to establish communications with at least a Blockchain or other DLT;
   - a Blockchain management module configured to exchange data to a Blockchain or other DLT;
   - the control module;
   the method comprising:
   - the control module automatically identifying the device based on data provided by the identification module;
   - the control module automatically determining the state of the product, sub-product, item or physical element, based on data provided by the sensor module and on the identified device associated to the product, sub-product, item or physical element;
   - the control module automatically determining the location of the device based on positioning data provided by the positioning module;
   - the control module, by means of the Blockchain management module and the first communications module, automatically uploading to a Blockchain at least one of the following:
      ∘ identification data received from the identification module;
      ∘ data received from the sensor module;
      ∘ the state of the product, sub-product, item or physical element, determined by the control module;
      ∘ positioning data received from the positioning module.
Clause 2. A method according to clause 1, wherein the identification module comprises at least one identification interface.
Clause 3. A method according to clause 2, wherein the identification module comprises at least two identification interfaces, the method further comprising:
   - the control module automatically selecting the appropriate identification interface to be used based on the environment in which the device is located.
Clause 4. A method according to any of clauses 1 a 3, wherein the sensor module comprises at least one sensor element, the method further comprising:
   - the control module automatically configuring at least one sensor comprised in the sensor module.
Clause 5. A method according to any of clauses 1 to 4, wherein the device comprises an actuation module comprising at least one actuator element, the method further comprising:
   - the control module, according to the determined state of the product, sub-product, item or physical element, automatically acting upon an actuator element.
Clause 6. A method according to clause 5, wherein the actuation module comprises at least one of the following actuator elements:
   - at least one actuator element configured to generate an audible signal;
   - at least one actuator element configured to generate a visual signal;
   - at least one actuator element configured to generate a haptic signal.
Clause 7. A method according to any of clauses 1 to 6, wherein the device comprises a second communications module configured to establish communications with at least one external system, the second communications module comprising at least one communications interface, the method further comprising:
   - the control module automatically establishing communications with the external system by means of the communications interface.
Clause 8. A method according to clause 7, wherein the first and second communications module comprises at least two communications interfaces, the method further comprising:
   - the control module automatically selecting the appropriate communications interface to be used based on the environment in which the device is located.
Clause 9. A method according to any of clauses 1 to 8, wherein the device comprises a display module, the method further comprising:
   - the control module automatically shows data received from any module comprised in the device and/or data determined by the control module, by means of the display module.
Clause 10. A method according to clause 9, wherein the display module is configured to display a user interface and to provide data to the control module when a user acts upon a data/control element comprised in the user interface, further comprising:
   - the control module automatically receiving data from the display module.
Clause 11. A method according to any of clauses 1 to 10, wherein the device comprises a storage module configured to store data received from any module comprised in the device and/or data determined by the control module, the method further comprising:
   - the control module automatically storing in the storage module data received from any module comprised in the device and/or data determined by the control module.
Clause 12. A non-transitory computer program product that causes a control module to perform a method according to any of clauses 1 to 11 of controlling a device for tracking a product, sub-product, item or physical element.
Clause 13. The non-transitory computer program product according to clause 12, embodied on a storage medium.
Clause 14. The non-transitory computer program product according to clause 12, carried on a carrier signal.
Clause 15. A control module for controlling a device for tracking a product, sub-product, item or physical element, the control module comprising a memory and a processor, embodying instructions stored in the memory and executable by the processor, the instructions comprising functionality to execute a method according to any of clauses 1 to 11 of controlling a device for tracking a product, sub-product, item or physical element.
Clause 16. A control module for controlling a device for tracking a product, sub-product, item or physical element, the device comprising:
   - an identification module configured to provide identification data of the device associated to the product, sub-product, item or physical element to be tracked;
   - a sensor module configured to provide data about at least one parameter that impact the device;
   - a positioning module configured to provide positioning data of the device;
   - a first communications module configured to establish communications with at least a Blockchain or other DLT;
   - a Blockchain management module configured to exchange data to a Blockchain or other DLT;
   - the control module;
   the control module comprising:
   - means for automatically identifying the device based on data provided by the identification module;
   - means for automatically determining the state of the product, sub-product, item or physical element, based on data provided by the sensor module and on the identified device associated to the product, sub-product, item or physical element;
   - means for automatically determining the location of the device based on positioning data provided by the positioning module;
   - means for automatically uploading to a Blockchain at least one of the following data, by means of the Blockchain management module and the first communications module:
      ∘ identification data received from the identification module;
      ∘ data received from the sensor module;
      ∘ the state of the product, sub-product, item or physical element, determined by the control module;
      ∘ positioning data received from the positioning module.
Clause 17. A control module for controlling a device for tracking a product, sub-product, item or physical element, the device comprising:
   - an identification module configured to provide identification data of the device associated to the product, sub-product, item or physical element to be tracked;
   - a sensor module configured to provide data about at least one parameter that impact the device;

   - a positioning module configured to provide positioning data of the device;
   - a first communications module configured to establish communications with at least a Blockchain or other DLT;
   - a Blockchain management module configured to exchange data to a Blockchain or other DLT;
   - the control module;
   the control module being configured to:
   - automatically identify the device based on data provided by the identification module;
   - automatically determine the state of the product, sub-product, item or physical element, based on data provided by the sensor module and on the identified device associated to the product, sub-product, item or physical element;
   - automatically determine the location of the device based on positioning data provided by the positioning module;
   - automatically upload to a Blockchain at least one of the following data, by means of the Blockchain management module and the first communications module:
      ∘ identification data received from the identification module;
      ∘ data received from the sensor module;
      ∘ the state of the product, sub-product, item or physical element, determined by the control module;
      ∘ positioning data received from the positioning module.
Clause 18. A device for tracking a product, sub-product, item or physical element, the device comprising:
   - an identification module configured to provide identification data of the device associated to the product, sub-product, item or physical element to be tracked,
   - a sensor module configured to provide data about at least one parameter that impact the device,
   - a positioning module configured to provide positioning data of the device,
   - a first communications module configured to establish communications with at least a Blockchain or other DLT,
   - a Blockchain management module configured to exchange data with a Blockchain or other DLT,
   - a control module according to any of clauses 15 to 17.
Clause 19. A device according to clause 18, wherein the identification module comprises at least two identification interfaces.
Clause 20. A device according to any of clauses 18 or 19, further comprising an actuation module comprising at least one actuator element.
Clause 21. A device according to clause 20, wherein the actuator module comprises at least one of the following actuator elements:
   - at least one actuator element configured to generate an audible signal;
   - at least one actuator element configured to generate a visual signal;
   - at least one actuator element configured to generate a haptic signal.
Clause 22. A device according to any of clauses 18 to 21, further comprising a second communications module configured to establish communications with at least one external system.
Clause 23. A device according to clause 22, wherein the first and/or second communications module comprises at least two communications interfaces.
Clause 24. A device according to any of clauses 22 or 23, further comprising a smart contract management module and wherein an external system is a smart contract system.
Clause 25. A device according to any of clauses 22 to 24, wherein the external system is selected from at least one of the following:
   - a mobile device;
   - at least one wireless router;
   - a data network;
   - a management system;
   - a blockchain system;
   - a smart contract system.
Clause 26. A device according to any of clauses 18 to 25, further comprising a display module.
Clause 27. A device according to clause 26, wherein the display module is configured to display at least one of the following:
   - data received by the control module from any module comprised in the device;
   - data determined by the control module;
   - data on the state of the product, sub-product, item or physical element;
   - data indicating tasks to be performed on a product, sub-product, item or physical element.
Clause 28. A device according to any of clauses 18 to 27, further comprising a storage module configured to store data received from any module comprised in the device and/or data determined by the control module.
Clause 29. A device according to any of clauses 18 to 28, further comprising a power module configured to power any of the modules comprised in the device.
Clause 30. A device according to any of clauses 18 to 29, being attachable to or wearable by a product, sub-product, item or physical element to be tracked.
Clause 31. A system for tracking at least one product, sub-product, item or physical element, the system comprising:
   - at least one device according to any of clauses 18 to 30;
   - a management system configured to control at least one device.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples but should be determined only by a fair reading of the claims that follow. If reference signs related to drawings are placed in parentheses in a claim, they are solely for attempting to increase the intelligibility of the claim and shall not be construed as limiting the scope of the claim.

## Claims

1. A method of controlling, by means of a control module, a device for tracking a product, sub-product, item or physical element, the device comprising:
- an identification module configured to provide identification data of the device associated to the product, sub-product, item or physical element to be tracked;
- a sensor module configured to provide data about at least one parameter that impact the device;
- a positioning module configured to provide positioning data of the device;
- a first communications module configured to establish communications with at least a Blockchain or other DLT;
- a Blockchain management module configured to exchange data with a Blockchain or other DLT;
- the control module;
the method comprising:
- the control module automatically identifying the device based on data provided by the identification module;
- the control module automatically determining the state of the product, sub-product, item or physical element, based on data provided by the sensor module and on the identified device associated to the product, sub-product, item or physical element;
- the control module automatically determining the location of the device based on positioning data provided by the positioning module;
- the control module, by means of the Blockchain management module and the first communications module, automatically uploading to a Blockchain at least one the following:
∘ identification data received from the identification module;
∘ data received from the sensor module;
∘ the state of the product, sub-product, item or physical element, determined by the control module;
∘ positioning data received from the positioning module.

2. A method according to claim 1, wherein the identification module comprises at least two identification interfaces, the method further comprising:
- the control module automatically selecting the appropriate identification interface to be used based on the environment in which the device is located.

3. A method according to any of claims 1 or 2, wherein the device comprises an actuation module comprising at least one actuator element, the method further comprising:
- the control module, according to the determined state of the product, sub-product, item or physical element, automatically acting upon an actuator element.

4. A method according to any of claims 1 to 3, wherein the device comprises a second communications module configured to establish communications with at least one external system, the second communications module comprising at least one communications interface, the method further comprising:
- the control module automatically establishing communications with the external system by means of the communications interface.

5. A method according to claim 4, wherein the first and/or second communications module comprises at least two communications interfaces, the method further comprising:
- the control module automatically selecting the appropriate communications interface to be used based on the environment in which the device is located.

6. A method according to any of claims 1 to 5, wherein the device comprises a display module, the method further comprising:
- the control module automatically shows data received from any module comprised in the device and/or data determined by the control module, by means of the display module.

7. A non-transitory computer program product that causes a control module to perform a method according to any of claims 1 to 6 of controlling a device for tracking a product, sub-product, item or physical element.

8. A control module for controlling a device for tracking a product, sub-product, item or physical element, the control module comprising a memory and a processor, embodying instructions stored in the memory and executable by the processor, the instructions comprising functionality to execute a method according to any of claims 1 to 6 of controlling a device for tracking a product, sub-product, item or physical element.

9. A control module for controlling a device for tracking a product, sub-product, item or physical element, the device comprising:
- an identification module configured to provide identification data of the device associated to the product, sub-product, item or physical element to be tracked;
- a sensor module configured to provide data about at least one parameter that impact the device;
- a positioning module configured to provide positioning data of the device;
- a first communications module configured to establish communications with at least a Blockchain or other DLT;
- a Blockchain management module configured to exchange data with a Blockchain or other DLT;
- the control module;
the control module comprising:
- means for automatically identifying the device based on data provided by the identification module;
- means for automatically determining the state of the product, sub-product, item or physical element, based on data provided by the sensor module and on the identified device associated to the product, sub-product, item or physical element;
- means for automatically determining the location of the device based on positioning data provided by the positioning module;
- means for automatically uploading to a Blockchain at least one of the following data, by means of the Blockchain management module and the first communications module:
∘ identification data received from the identification module;
∘ data received from the sensor module;
∘ the state of the product, sub-product, item or physical element, determined by the control module;
∘ positioning data received from the positioning module.

10. A control module for controlling a device for tracking a product, sub-product, item or physical element, the device comprising:
- an identification module configured to provide identification data of the device associated to the product, sub-product, item or physical element to be tracked;
- a sensor module configured to provide data about at least one parameter that impact the device;
- a positioning module configured to provide positioning data of the device;
- a first communications module configured to establish communications with at least a Blockchain or other DLT;
- a Blockchain management module configured to exchange data to a Blockchain or other DLT;
- the control module;
the control module being configured to:
- automatically identify the device based on data provided by the identification module;
- automatically determine the state of the product, sub-product, item or physical element, based on data provided by the sensor module and on the identified device associated to the product, sub-product, item or physical element;
- automatically determine the location of the device based on positioning data provided by the positioning module;
- automatically upload to a Blockchain at least one the following data, by means of the Blockchain management module and the first communications module:
∘ identification data received from the identification module;
∘ data received from the sensor module;
∘ the state of the product, sub-product, item or physical element, determined by the control module;
∘ positioning data received from the positioning module.

11. A device for tracking a product, sub-product, item or physical element, the device comprising:
- an identification module configured to provide identification data of the device associated to the product, sub-product, item or physical element to be tracked,
- a sensor module configured to provide data about at least one parameter that impact the device,
- a positioning module configured to provide positioning data of the device,
- a first communications module configured to establish communications with at least a Blockchain or other DLT,
- a Blockchain management module configured to exchange data with a Blockchain or other DLT,
- a control module according to any of claims 8 to 10.

12. A device according to claim 11, further comprising a second communications module configured to establish communications with at least one external system.

13. A device according to any of claims 11 or 12, wherein the external system is selected from at least one of the following:
- a mobile device;
- at least one wireless router;
- a data network;
- a management system;
- a blockchain system;
- a smart contract system.

14. A device according to any of claims 11 to 13, being attachable to or wearable by a product, sub-product, item or physical element to be tracked.

15. A system for tracking at least one product, sub-product, item or physical element, the system comprising:
- at least one device according to any of claims 11 to 14;
- a management system configured to control at least one device.
